# EUROPÄISCHE PATENTSCHRIFT

(11) **EP 2 290 738 B1**
(45) Veröffentlichungstag und Bekanntmachung des Hinweises auf die Patenterteilung: **31.07.2019**
(21) Anmeldenummer: 10009874.8
(22) Anmeldetag: 21.09.2004
(51) Int. Cl.: H01M 10/0525, H01M 10/054, H01M 10/058, H01M 10/0585, H01M 2/14, H01M 4/13, H01M 4/139, H01M 4/587, H01M 10/0563, H01M 4/525, H01M 4/62

(54) **ELEKTROCHEMISCHE BATTERIEZELLE**
ELECTROCHEMICAL BATTERY CELL
ELEMENT DE BATTERIE ELECTROCHIMIQUE

(30) Priorität: 23.09.2003 DE 10343862
(43) Veröffentlichungstag der Anmeldung: 02.03.2011
(62) Teilanmeldung aus: 04786822.9
(73) Patentinhaber: Innolith Assets AG, 4052 Basel (CH)
(72) Erfinder: Zinck, Laurent, 67470 Mothern (FR); Borck, Markus, 70567 Stuttgart (DE); Biollaz, Heide, 79761 Waldshut (DE); Ripp, Christiane, 76327 Pfinztal (DE); Hambitzer, Günther, 53115 Bonn (DE)
(74) Vertreter: Lemcke, Brommer & Partner Patentanwälte Partnerschaft mbB

(56) Entgegenhaltungen:
- EP-A- 0 468 942
- EP-A- 0 767 506
- WO-A-00/44061
- WO-A-00/79631
- WO-A-02/09213
- WO-A-03/077328
- DE-A1- 10 110 716
- DE-C1- 19 911 800
- US-A- 4 567 031
- US-A- 5 006 428
- US-A- 5 595 837
- US-A1- 2003 049 524
- PATENT ABSTRACTS OF JAPAN Bd. 008, Nr. 285 (E-287), 26. Dezember 1984 (1984-12-26) & JP 59, 149654, A, (KAO SEKKEN KK), 27. August 1984 (1984-08-27)

## Beschreibung

Die Erfindung betrifft ein Verfahren zur Herstellung einer elektrochemischen Batteriezelle mit einer negativen Elektrode (Kathode), einem ein Leitsalz enthaltenden Elektrolyt und einer positiven Elektrode (Anode). Insbesondere richtet sich die Erfindung auf Alkalimetallzellen, bei denen die aktive Masse ein Alkalimetall ist, das beim Laden der Zelle in und/oder an der negativen Elektrode gespeichert wird. Die aktive Masse kann jedoch auch ein anderes Metall, insbesondere ein Erdalkalimetall oder ein Metall der zweiten Gruppe des Periodensystems sein. Das Leitsalz des Elektrolyten besteht aus Kationen des Metalls, das die aktive Masse bildet und geeigneten Anionen. Im Falle von Alkalimetallzellen wird als Leitsalz vorzugsweise ein Tetrahalogenoaluminat des Alkalimetalls, beispielweise LiAlCl₄, verwendet.

Der Elektrolyt basiert auf SO₂. Als "auf SO₂ basierend" (SO₂ based) werden Elektrolyten bezeichnet, die SO₂ nicht nur als Zusatz in geringer Konzentration enthalten, sondern bei denen die Beweglichkeit der Ionen des Leitsalzes, das in dem Elektrolyten enthalten ist und den Ladungstransport bewirkt, zumindest teilweise durch das SO₂ gewährleistet wird. Weitere Informationen hierzu können der WO 00/79631 und den darin zitierten Dokumenten entnommen werden Die EP 0 767 506 A offenbart weitere SO₂ basierte elektrochemische Zellen.

Nachfolgend wird beispielhaft überwiegend auf Alkalimetallzellen, insbesondere Lithiumzellen Bezug genommen. Dies darf jedoch nicht als Einschränkung der allgemeinen Anwendbarkeit der Erfindung verstanden werden.

Typisch für derartige Zellen ist ein Aufbau aus mehreren übereinander angeordneten Schichten, deren Flächenabmessungen sehr viel größer als ihre Dicke ist. Sie haben etwa gleich große Flächenabmessungen und sind in der Zelle sandwichartig übereinander angeordnet. Gebräuchlich sind prismatische Zellen mit in der Regel quaderförmigem Gehäuse und geraden Schichten sowie zylindrische Zellen, in deren Innerem die Schichten rollenförmig gewickelt sind. Übliche Zellen haben mindestens drei Schichten, nämlich die negative Elektrode, die positive Elektrode und einen Separator, der beide Elektroden elektrisch und mechanisch trennt.

Die negative Elektrode ist üblicherweise als sogenannte "Insertionselektrode" ausgebildet. Dieser Begriff bezeichnet generell Elektroden, die das aktive Metall derartig in ihrem Inneren enthalten, dass es zum Austausch mit dem Elektrolyt beim Laden und Entladen der Zelle bereit ist. Bei Lithium-Ionen- und Lithium-Polymer- Zellen ist die negative Elektrode eine Insertionselektrode auf Basis von Graphit, in deren Inneres beim Laden der Zelle Metallionen des Leitsalzes aufgenommen werden. Die Zelle soll nach Möglichkeit so betrieben werden, dass Betriebszustände vermieden werden, bei denen aktives Metall an der Oberfläche der Elektrode abgeschieden wird. Dies ist in der Praxis jedoch nur mit aufwendigen elektronischen Maßnahmen zu erreichen, durch die ein Überladen der Zelle sowie ein Laden mit relativ hohen (über einem für die jeweilige Zelle gültigen Grenzwert liegenden) Stromstärken zuverlässig vermieden wird. Die Elektronik muss extrem genau (Abschaltspannung beispielsweise 4,2 V ± 0,01 V) und extrem zuverlässig (höchstens ein Fehler auf 100 Millionen Stück) sein. Durch derartige Maßnahmen werden die Kosten wesentlich erhöht. Dennoch verbleiben gewisse Risiken.

Die Erfindung befasst sich mit einem Problem, das daraus resultiert, dass sich auf der negativen Elektrode, insbesondere bei Zellen mit einem auf SO₂ basierenden Elektrolyten, aufgrund elektrochemischer Gegebenheiten beim ersten Laden der Zelle eine Deckschicht bildet. Im Rahmen der Erfindung wurde festgestellt, dass diese Deckschichtbildung die Ursache einer erheblichen Minderung der Entladekapazität der Zelle ist und eine diesbezügliche Optimierung dadurch erreicht werden kann, dass für die Bildung der Deckschicht erforderliches aktives Metall aus einem Zusatzvorrat zu einer der Elektroden übertragen wird, wobei
- der Zusatzvorrat in Kontakt mit der Elektrolytlösung steht,
- eine Hilfselektrode in elektrisch leitendem Kontakt zu der Elektrolytlösung steht,
- eine elektrische Leitungsverbindung zwischen der Hilfselektrode und der Elektrode, zu der das aktive Metall übertragen werden soll, hergestellt wird und
- die Übertragung des aktiven Metalls dadurch bewirkt wird, dass ein elektrischer Strom zwischen der Hilfselektrode und der Elektrode, zu der es übertragen wird, fließt.

Auch dies wird nachfolgend - ohne Beschränkung der Allgemeinheit - anhand von Zellen erläutert, deren aktives Metall ein Alkalimetall ist. Dabei besteht die Deckschicht aus Alkalimetalldithionit (A₂S₂O₄), im Falle einer Lithiumzelle also aus Li₂S₂O₄. Die Deckschichtbildung erfolgt aufgrund von elektrochemischen Bedingungen, die sich vereinfacht dahingehend beschreiben lassen, dass die Reaktion, die zur Bildung der Deckschicht führt, bereits bei einer Spannung (im Fall einer Li-Zelle ab 3 Volt vs. Li/Li⁺) stattfindet, die niedriger ist als die normale Betriebsspannung der Zelle. Deshalb wird zunächst bevorzugt das Dithionit gebildet, bevor metallisches Alkalimetall auf bzw. in der negativen Elektrode gespeichert und damit die Zelle geladen wird.

Das Lithium (hier wieder beispielhaft genannt auch für andere Alkalimetalle) für die Bildung des Li₂S₂O₄ stammt normalerweise aus der positiven Elektrode. Dies hat zur Folge, dass bereits beim ersten Ladezyklus ein Teil des eigentlich für die Zellkapazität benötigten Lithiums verbraucht wird. Dieses Problem ist besonders schwerwiegend, wenn die aktive Masse der negativen Elektrode stark porös ist und folglich eine große innere Oberfläche hat. Dadurch entsteht eine entsprechend große Deckschichtfläche und ein hoher Anteil des vor Beginn des Ladevorganges in der positiven Elektrode enthaltenen Lithiums (beispielsweise etwa 25 %) wird beim ersten Ladevorgang für die Deckschichtbildung verbraucht. In besonderem Maß besteht dieses Problem, wenn die negative Elektrode eine Insertionselektrode, vor allem auf Basis von Graphit, ist.

Verschiedene Ausführungsformen der Erfindung unterscheiden sich hinsichtlich der Quelle des zusätzlichen aktiven Metalls, der verwendeten Hilfselektrode sowie hinsichtlich der Elektrode, die das Ziel der Übertragung des zusätzlichen aktiven Metalls (nachfolgend "Zielelektrode") ist.

Der Zusatzvorrat des aktiven Metalls kann insbesondere in folgenden Varianten eingesetzt werden, die grundsätzlich auch in Kombination miteinander verwendet werden können:
- Das aktive Metall kann als reines (d.h. nicht chemisch gebundenes) Metall (zweckmäßigerweise durch Eintauchen) in Kontakt mit dem Elektrolyt gebracht werden.
- Eine zusätzliche Menge an Elektrolyt kann, in einem Behältnis außerhalb des Gehäuses der Zelle oder in der Zelle selbst, bereitgehalten werden. Im erstgenannten Fall ist der zusätzliche Elektrolyt über eine (den Ionentransport ermöglichende) Elektrolytbrücke mit dem Elektrolyt in der Zelle verbunden.
- Das zusätzliche aktive Metall kann in Form einer geeigneten Verbindung, im Falle eines Alkalimetalls A vorzugsweise als dessen Dithionit A₂S₂O₄, eingesetzt werden.

Die Hilfselektrode kann grundsätzlich von einem leitenden Element gebildet werden, das zusätzlich zu den für den Betrieb der Zelle erforderlichen Bauteilen in die Elektrolytlösung eintaucht. Bevorzugt wird jedoch das Gehäuse der Zelle selbst, genauer gesagt mindestens ein elektrisch leitender Teil von dessen Innenwand, als Hilfselektrode verwendet. Wenn die Quelle des zusätzlichen Metalls metallisch leitet, kann sie auch selbst die Hilfselektrode bilden.

Zielelektrode kann sowohl die negative als auch die positive Elektrode der Zelle sein.
- Die Übertragung des aktiven Metalls aus dem Zusatzvorrat auf die negative Elektrode sollte nach dem Einfüllen des Elektrolyts, jedoch vor dem ersten Laden der Zelle, stattfinden und so lange fortgesetzt werden, bis sich dabei auf der Oberfläche der Elektrode eine Deckschicht in etwa der gleichen Menge gebildet hat wie beim normalen Laden der Zelle (bevor metallisches Alkalimetall auf bzw. in der negativen Elektrode gespeichert wird).
- Im Falle der positiven Elektrode geht es darum, durch die zusätzliche Zuführung des Alkalimetalls den Verlust zu ersetzen, der in der positiven Elektrode als Resultat der Deckschichtbildung bei einem vorausgehenden Ladevorgang eingetreten ist. In diesem Fall bildet man nach dem Einfüllen des Elektrolyts durch Laden der Zelle die Deckschicht auf der negativen Elektrode, wobei dieser Ladevorgang bevorzugt so lange fortgesetzt werden sollte, bis metallisches Alkalimetall auf bzw. in der negativen Elektrode gespeichert und damit die Zelle geladen wird. Danach erfolgt die Zuführung des aktiven Metalls zu der positiven Elektrode und damit der Ersatz des daraus bei dem Ladevorgang entnommenen Alkalimetalls.

Nach den Experimenten, die der Erfindung zugrunde liegen, können lokale Kurzschlüsse und die damit verbundene Erwärmung des Elektrolyten zur Bildung von Verbindungen des aktiven Metalls mit dem SO₂, im Falle einer Lithiumzelle zur Bildung von Lithiumdithionit (Li₂S₂O₄) führen. Obwohl diese Verbindung relativ schwer löslich ist, wird keines der bei der Reaktion verbrauchten Ausgangsprodukte (Li und SO₂) dauerhaft der Zellfunktion entzogen, weil der Bildung des Dithionits eine Auflösungsreaktion gegenübersteht, die hinreichend schnell ist, um zu einem für die Zellfunktion vorteilhaften Gleichgewicht zu kommen. Auch hierzu kann Näheres der WO 00/79631 entnommen werden.

Daneben kann im Bereich lokaler Kurzschlüsse eine Reaktion mit der positiven Elektrode stattfinden. Dies gilt insbesondere für Zellen, bei denen die positive Elektrode ein Metalloxid, insbesondere ein Oxid eines Übergangsmetalls der Ordnungszahl 22 bis 28 enthält. Das Oxid liegt bevorzugt als Interkalationsverbindung aus dem aktiven Metall, einem der genannten Übergangsmetalle und Sauerstoff vor. Unter den genannten Metallen sind Kobalt, Nickel und Eisen besonders bevorzugt. Praktische Bedeutung haben insbesondere auch binäre und ternäre metalloxidische Interkalationsverbindungen, die zwei oder drei unterschiedliche Übergangsmetalle in der Gitterstruktur enthalten. Auch hinsichtlich dieser bei der vorliegenden Erfindung besonders bevorzugten Elektrodenmaterialien kann ergänzend auf die WO 00/79631 sowie auf das dort zitierte US-Patent 4,567,031 verwiesen werden. Beispielsweise bei Verwendung einer positiven Elektrode auf Basis von Kobaltoxid findet nach den Erkenntnissen der Erfinder infolge lokaler Kurzschlüsse folgende Reaktion statt: CoO₂+Li→LiCoO₂

Diese Reaktion entspricht der Einlagerung des aktiven Metalls während des Entladens der Zelle.

Generell hat sich die Erfindung insbesondere bei Zellkonstruktionen bewährt, bei denen die negative Elektrode so ausgebildet ist, dass beim Laden der Zelle positive Metallionen des Leitsalzes in ihrem Inneren aufgenommen werden. Bei derartigen Konstruktionen kommt es beim normalen Laden der Zelle zunächst nicht zu einer Abscheidung von aktivem Metall auf der Elektrodenoberfläche, sondern die Speicherung des aktiven Metalls während des Ladevorgangs findet im Inneren einer Struktur statt, die Bestandteil der negativen Elektrode ist. Zelltypen, für die diese Bedingung gilt, werden hier allgemein als "Insertionselektrode" bezeichnet. Als Insertionselektrode in diesem allgemeinen Sinne ist auch eine Konstruktion mit einem flächigen, elektronisch leitendem Substrat und einer damit verbundenen Abscheideschicht, in deren Poren die aktive Masse beim Laden aufgenommen wird, anzusehen. Eine solche Konstruktion ist aus der WO 02/09213 bekannt, auf die insoweit Bezug genommen wird.

Gemäß einer weiteren Variante erfolgt die Aufnahme der positiven Metallionen in das Innere einer elektrisch leitfähigen Elektrodenmasse, die Bestandteil der negativen Elektrode ist. Ein wichtiges Beispiel einer solchen elektrisch leitfähigen Elektrodenmasse sind kohlenstoffhaltige Elektroden, insbesondere Graphitelektroden, wie sie auch für Lithium-Ionen-Zellen verwendet werden. Dabei erfolgt die Speicherung des Lithiums während des Ladens nicht durch Ablagerung in porösen Hohlräumen, sondern durch Einlagerung in die Gitterstruktur der elektrisch leitfähigen Elektrodenmasse. Neben der erwähnten Graphitelektroden können als Beispiele solcher Elektrodenmaterialien Lithiuminterkalationselektroden auf Basis von Li₄Ti₅O₁₂ oder Legierungselektroden genannt werden.

Eine bevorzugte Ausführungsform betrifft ein Herstellungsverfahren für eine elektrochemische Batteriezelle, insbesondere einen innerhalb eines solchen Verfahrens stattfindenden Reinigungsschritt, bei dem eine Elektrode der Zelle dadurch für ihre Funktion optimiert wird, dass an der Elektrode gebundene OH⁻-Ionen entfernt werden, wobei ein Reinigungsmittel, das eine mit OH⁻-Ionen reagierende erste Reinigungskomponente enthält, derartig mit der Elektrode in Kontakt gebracht wird, dass an ihr gebundene OH⁻-Ionen durch Reaktion mit der ersten Reinigungskomponente von der Elektrodenoberfläche gelöst werden, und Bestandteile des Reinigungsmittels oder Reaktionsprodukte, die die Funktion der Zelle stören könnten, von der Elektrode entfernt werden.

Für die Funktion von wasserfreien Batteriezellen, also insbesondere auch Zellen, die mit einem auf SO₂ basierenden Elektrolyten arbeiten, ist es sehr wichtig, dass in der Elektrodenstruktur vorhandene Wasserreste (sowohl molekulares Wasser als auch H⁺- und OH⁻-Ionen) vollständig entfernt werden. Dies stellt insbesondere bei Verwendung der zuvor erläuterten Insertionselektroden ein schwerwiegendes Problem dar.

Im Rahmen der Erfindung wurde festgestellt, dass die Gegenwart von chemisch gebundenem Wasser zu einer Passivierung der Elektroden führen kann, so dass die Elektrodenprozesse nur gehemmt ablaufen. Im Falle einer Insertionselektrode, insbesondere einer Alkalimetall-Interkalationselektrode (z.B. des weiter oben erwähnten aus der WO 00/79631 bekannten Typs metalloxidischer Interkalationsverbindungen) betrifft dies die Auslagerung des Alkalimetalls beim Laden der Zelle bzw. die Einlagerung beim Entladen. Die Passivierung führt zu einer Erhöhung des Innenwiderstandes der Zelle.

Nach den Feststellungen der Erfinder lässt sich die Passivierung darauf zurückführen, dass eine Reaktion der Oberflächenmoleküle der Elektrode mit Wasser (z.B. aus Luftfeuchtigkeit) zur Bildung einer Deckschicht führt, die ein Hydroxid des aktiven Metalls, im Falle eines Alkalimetalls A also eine Verbindung des Typs AOH, enthält. Selbst geringe Spuren von Wasser führen zur Ausbildung einer Hydroxid-Deckschicht. Nach dem Kenntnisstand der Erfinder kann die Bildung einer Deckschicht schon beim Herstellen von Elektroden, deren aktive Masse auf einer metalloxidischen Interkalationsverbindung, insbesondere LiCoO₂, basiert, kaum vermieden werden. Dies bezieht sich nicht nur auf die äußere Oberfläche der Elektrode, sondern (im gebräuchlichen Fall eines porösen Elektrodenmaterials) auch auf deren innere Oberfläche (in den Poren). Die Passivierung der Elektrode läßt sich durch Reaktion mit der Reinigungskomponente, die mit OH⁻-Ionen reagiert und hier als erste Reinigungskomponente bezeichnet wird, beseitigen. Die erste Reinigungskomponente wird ohne Beschränkung der Allgemeinheit nachfolgend auch als Aktivierungskomponente bezeichnet.

Gegenstand der Erfindung ist auch eine Batteriezelle mit einer Insertionselektrode, insbesondere einer Interkalationselektrode, deren Oberfläche im wesentlichen frei von OH⁻-Ionen ist. Vorzugsweise ist die Elektrode auch im wesentlichen frei von H⁺-Ionen. Dabei ist "im wesentlichen frei von OH⁻-Ionen bzw. H⁺-Ionen" dahingehend zu verstehen, dass die mit dem Vorhandensein der Ionen verbundene Passivierung der Elektrode bzw. der resultierende Kapazitätsverlust nicht in einem solchen Ausmaß vorhanden ist, dass die praktische Funktion der Elektrode in einer Batteriezelle beeinträchtigt wird. Wie weiter unten noch näher erläutert wird, führt die Passivierung zu einer kontinuierlichen Erhöhung des Innenwiderstandes der Zelle während der Lade- und Entladezyklen. Die diesbezüglichen Eigenschaften der Elektrode lassen sich beispielsweise mittels zyklischer Voltamogramme beobachten, wie ebenfalls weiter unten noch näher erläutert wird. Bevorzugt wird die Freiheit der Oberfläche der aktiven Masse von Hydroxid-Ionen durch das vorstehend beschriebene Verfahren mittels der ersten Reinigungskomponente erreicht.

Im Rahmen der Erfindung wurde festgestellt, dass Insertionselektroden der hier diskutierten Art einen Gehalt an chemisch gebundenem Wasser in der Größenordnung von 10000 ppm (d.h. 1 Gew% H₂O bezogen auf die elektrochemisch aktive Elektrodenmasse, insbesondere LiCoO₂) haben. Eine erfindungsgemäße optimierte Elektrode hat einen Wassergehalt von höchstens 5000 ppm, bevorzugt höchstens 1000 ppm, besonders bevorzugt höchstens 100 ppm und ganz besonders bevorzugt höchstens 10 ppm.

Als besonders geeignete erste Reinigungskomponente hat sich eine protonenfreie Lewis-Säure erwiesen. Mit diesem Begriff wird eine Substanz bezeichnet, die Säureeigenschaften im Sinne der von G.N. Lewis gegebenen Definition hat (also ein Elektronenakzeptor ist), jedoch kein H⁺-Ion enthält. Bevorzugte Beispiele von Lewis-Säuren sind AlF₃, BF₃, CO₂, CS₂ und GaCl₃. Generell läßt sich die Eignung einer Lewis-Säure für die Zwecke der Erfindung experimentell erproben.

Eine Vorauswahl geeigneter Lewis-Säuren kann aufgrund deren Stärke erfolgen, die wiederum von der Differenz der Elektronegativitätswerte der die Säure bildenden Atome (beispielsweise AI und F im Fall von AlF₃) abgeschätzt werden kann. Je größer diese Differenz ist, desto stärker ist die Lewis-Säure.

Das Reinigungsmittel ist in der Regel eine Flüssigkeit, die die erste Komponente in einem geeigneten Lösungsmittel enthält. Als Lösungsmittel sind insbesondere aprotische Flüssigkeiten, beispielsweise Tetrachlorkohlenstoff (CCl₄) geeignet. Die erforderliche Wasserfreiheit des Lösungsmittels kann beispielsweise mittels eines Molsiebs, insbesondere auf der Basis von Metallaluminosilikat mit großer Oberfläche, erreicht werden. Grundsätzlich kann als Lösungsmittel auch ein Gas oder überkritisches Fluid, insbesondere auf der Grundlage von überkritischem CO₂, verwendet werden. Die Reinigungskomponente kann auch selbst als Fluid (z.B. über kritisches CO₂) oder Gas (z.B. CS₂) vorliegen. In solchen Fällen muss das Reinigungsmittel selbstverständlich kein zusätzliches Lösungsmittel enthalten.

Die Konzentration der Aktivierungskomponente in dem Reinigungsmittel sollte möglichst hoch sein, wobei im Falle einer Lösung eine Obergrenze aus der Löslichkeit der Aktivierungskomponente resultiert. In der Regel ist eine gesättigte Lösung bevorzugt. Grundsätzlich ist eine Aktiverungswirkung jedoch auch schon bei geringeren Konzentrationen möglich. Die geeignete Konzentration muss im Einzelfall in Verbindung mit der Dauer der Reinigungsbehandlung experimentell bestimmt werden und hängt selbstverständlich auch von der verwendeten Lewis-Säure ab.

Das Reinigungsmittel muss in der Praxis folgende Bedingungen erfüllen:
- Sofern das Verfahren derartig angelegt ist, dass mindestens ein Teil des Reinigungsmittels bei der Herstellung der Zelle in der Insertionselektrode verbleibt, muss das Reinigungsmittel insoweit für die Funktion der Zelle unschädlich sein. Schädliche Bestandteile müssen sich leicht und vollständig entfernen lassen.
- Das Reinigungsmittel muss mit dem Elektrodenmaterial verträglich sein. Insbesondere darf es keine dessen Funktion störende Reaktion verursachen.

Gemäß einer bevorzugten Ausführungsform wird zur Optimierung von Insertionselektroden in dem Herstellungsverfahren eine zweite Reinigungskomponente verwendet, die mit H⁺-Ionen reagiert und in einem Reinigungsmittel derartig mit der Insertionselektrode in Kontakt gebracht wird, dass in ihr gebundene H⁺-Ionen durch Reaktion mit der zweiten Reinigungskomponente aus dem Inneren der Elektrode gelöst werden. Im Rahmen der Erfindung wurde festgestellt, dass die Eigenschaften von Insertionselektroden, insbesondere Interkalationselektroden der weiter oben erläuterten Art, auch dadurch beeinträchtigt werden, dass H⁺-Ionen (Protonen) an das Elektrodenmaterial binden. Die Protonen tauschen mit den Alkalimetallionen der Insertionselektrode aus, reduzieren dadurch deren Aufnahmefähigkeit für aktives Metall (insbesondere Alkalimetall) und damit die elektrische Kapazität der Zelle. Mittels der zweiten Reinigungskomponente werden die Protonen aus der Insertionselektrode extrahiert. Dadurch wird ihre Aufnahmekapazität und damit auch die elektrische Speicherkapazität der Zelle verbessert.

Als zweite Reinigungskomponente eignet sich insbesondere ein Salz, das mit den in der Insertionselektrode gebundenen Protonen eine lonenaustauschreaktion eingeht. Geeignete Beispiele sind Halogenide, insbesondere Fluoride eines Alkalimetalls, Erdalkalimetalls oder eines Metalls der dritten Hauptgruppe des Periodensystems. Ohne Beschränkung der Allgemeinheit wird nachfolgend für die zweite Reinigungskomponente auch die Bezeichnung "Reinigungssalz" verwendet.

Hinsichtlich beider Reinigungskomponenten und deren Verwendung in dem Herstellungsverfahren sind verschiedene Varianten möglich. Beispielsweise kann mindestens eine Teilmenge des Reinigungssalzes schon bei der Herstellung der Elektrodenmasse in diese und damit in die Elektrode eingebracht werden. Es kann auch mit einer Verfahrensführung gearbeitet werden, bei der die erste und/oder die zweite Reinigungskomponente nicht unmittelbar in das Reinigungsmittel eingebracht wird. Vielmehr besteht selbstverständlich auch die Möglichkeit, dass diese Komponenten in situ mittels geeigneter Vorreaktionen gebildet werden. Beispielhaft genannt seien Salze, die ein Reinigungssalz dadurch bilden können, dass sie Halogenide, bevorzugt Fluoride abspalten, insbesondere Salze der Anionen PF₆⁻, AsF₆⁻, BF₄⁻ und AlF₄⁻. Auch organische Salze können sich als Ausgangsprodukte zur in situ-Bildung eines Reinigungssalzes eignen.

Gemäß einer bevorzugten Ausgestaltung dieses Herstellungsverfahrens erfolgt die Entfernung der OH⁻ und H⁺-Ionen zweistufig in zwei getrennten Schritten, bei denen jeweils ein getrenntes (vorzugsweise auch unterschiedliches) Lösungsmittel eingesetzt wird.

Insbesondere kann in einer ersten Stufe die Insertionselektrode mit einem Reinigungsmittel kontaktiert werden, das eine protonenfreie Lewis-Säure in einem leicht flüchtigen aprotischen Lösungsmittel, beispielsweise CCl₄ enthält. Dieses Reinigungsmittel wird so lange einwirken gelassen, bis die OH⁻-Ionen von der Elektrode in das Reinigungsmittel übergegangen sind. Danach wird es entfernt.

In einer zweiten Stufe wird die Elektrode mit einem zweiten Reinigungsmittel in Kontakt gebracht, das die zweite Reinigungskomponente enthält. Nach Ablauf der für den Übergang der Protonen aus der Elektrode in das Reinigungmsittel erforderlichen Reaktion kann auch das zweite Reinigungsmittel wieder entfernt werden. Die resultierende optimierte Elektrode muss selbstverständlich in wasserfreier Atmosphäre weiterverarbeitet werden, damit ihre Eigenschaften nicht erneut durch Aufnahme von Wasser und dessen Bestandteilen OH⁻ und H⁺ verschlechtert werden.

Grundsätzlich kann als Lösungsmittel einer Reinigungsflüssigkeit auch der für die jeweilige Zelle vorgesehene Elektrolyt verwendet werden. Insbesondere kann es zweckmäßig sein, ein geeignetes Reinigungssalz zusammen mit dem Elektrolyt in die Zelle einzubringen. Da die durch lonenaustausch mit den in der Insertionselektrode enthaltenen Protonen gebildeten Verbindungen, beispielsweise HF und HCl, flüchtig sind, entweichen sie von selbst, wobei man dies durch Anwendung von Unterdruck (Evakuieren) beschleunigen kann. In einem solchen Fall muss die Reinigungsflüssigkeit nicht aus der Zelle entfernt werden, sondern bleibt darin als Elektrolyt, wobei verbliebene Reste des Reinigungssalzes weitere positive Wirkungen (neben der Extraktion der H⁺-Ionen aus der Elektrode) haben.

Die Behandlung der Elektroden mit den Reinigungsmitteln kann grundsätzlich sowohl innerhalb als auch außerhalb der Zelle erfolgen. Im Falle des zweistufigen Verfahrens kann es insbesondere zweckmäßig sein, die erste Verfahrensstufe (Entfernen der OH⁻-Ionen) außerhalb der Zelle durchzuführen, danach die teilweise optimierte Elektrode in die Zelle einzubauen und die zweite Reinigungsstufe (Extraktion der H⁺-Ionen) in der Zelle durchzuführen.

Die Erfindung wird nachfolgend anhand der Figuren näher erläutert. Die dargestellten und beschriebenen Besonderheiten können einzel oder in Kombination verwendet werden, um bevorzugte Ausgestaltungen der Erfindung zu schaffen. Es zeigen:
- Fig. 1: einen schematischen Querschnitt durch eine erfindungsgemäße Batteriezelle;
- Fig. 2: eine perspektivische Prinzipdarstellung zur Erläuterung der Anordnung und der Größenverhältnisse der Elektrodenmassen bei einer beispielhaften Ausführungsform der Erfindung;
- Fig. 3: eine perspektivische Prinzipdarstellung zur Erläuterung eines Verfahrens zur experimentellen Auswahl eines geeigneten Materials für eine poröse Isolatorschicht;
- Fig. 4: eine graphische Darstellung von Meßergebnissen aus der experimentellen Erprobung der Erfindung;
- Fig. 5 und Fig. 6: zyklische Voltamogramme aus der experimentellen Erprobung der Erfindung;
- Fig. 7: eine zusammenfassende Darstellung von aufgrund von zyklischen Voltamogrammen gemäß den Figuren 5 und 6 gewonnenen Ergebnissen;
- Fig. 8: eine graphische Darstellung der Entladekapazität von Zellen in Abhängigkeit von der Zahl der Lade- und Entladezyklen;
- Fig. 9: eine Prinzipskizze zur Erläuterung einer ersten Variante der Erfindung;
- Fig. 10: eine Prinzipskizze zur Erläuterung einer zweiten Variante der Erfindung;
- Fig. 11: eine Prinzipskizze in einer Teil-Schnittdarstellung zur Erläuterung einer dritten Variante der Erfindung.

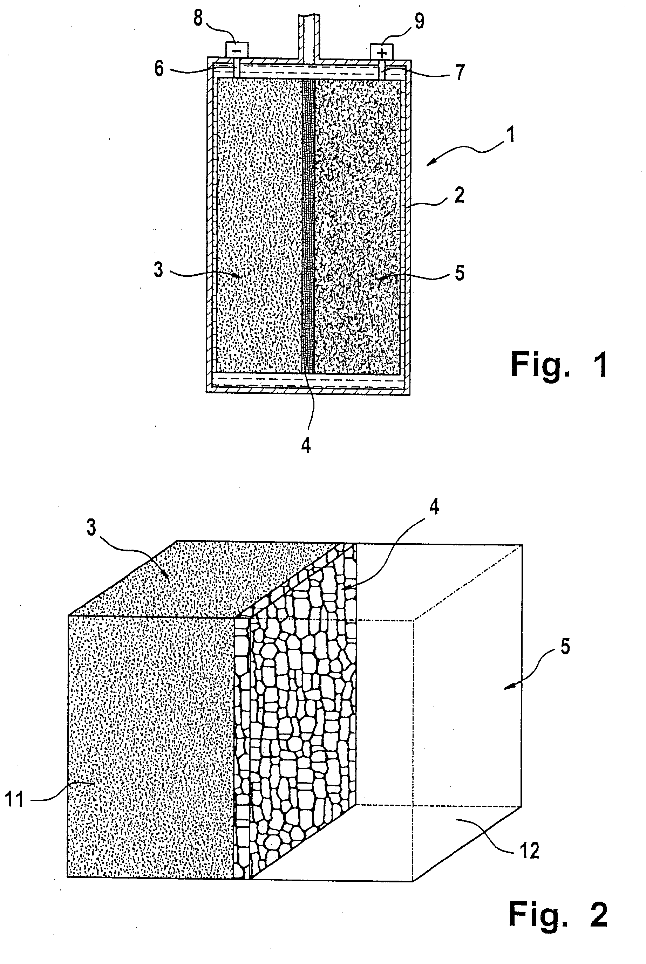

Figur 1 zeigt schematisch eine elektrochemische Batteriezelle 1 mit einem Gehäuse 2, in deren Innenraum sich eine Sandwich-Anordnung von Schichten befindet, nämlich eine negative Elektrode 3, eine poröse Isolationsschicht 4 und eine positive Elektrode 5. Die Elektroden 3,5 sind über elektrische Ableiter 6,7 mit Anschlusskontakten 8,9 verbunden, über die die Zelle zum Laden mit einem Ladegerät bzw. bei der Verwendung mit einem Stromverbraucher verbunden werden kann.

Die Konstruktion der Zelle ist weitgehend konventionell und muss nicht näher erläutert werden. Eine Besonderheit besteht darin, dass zwischen den Elektroden 3,5 kein Separator, sondern eine poröse Isolatorschicht 4 vorhanden ist, die das Durchwachsen von aktivem Metall, das beim Laden der Zelle an der der positiven Elektrode 5 zugewandten Oberfläche der negativen Elektrode abgeschieden wird, durch die Isolatorschicht 4 hindurch begünstigt. Dabei kommt es zu lokalen Kontakten zwischen dem aktiven Metall und der der negativen Elektrode 3 zugewandten Oberfläche der positiven Elektrode 5 und infolgedessen finden lokale Kurzschlüsse statt.

Figur 1 und noch deutlicher Figur 2 zeigen, dass die Elektroden 3,5 vorzugsweise sehr viel dicker als die Isolatorschicht 4 sind. Die Isolatorschicht 4 hat bevorzugt eine Dicke von maximal 100 µm, während die Elektroden eine Dicke von typischerweise etwa 0,1 mm bis 2 mm haben. Diese Zahlenwerte zeigen, dass die Darstellung in den Figuren zwar hinsichtlich der Dickenrelationen etwa maßstäblich ist, nicht jedoch hinsichtlich der absoluten Dicke der Schichten. Vielmehr enthält eine kommerzielle Batterie in der Regel ein Paket aus einer Mehrzahl dünner Schichten. Insoweit unterscheidet sich die Erfindung, abgesehen von den hier erläuterten Besonderheiten, nicht von üblichen Batterien.

Die relativ große Dicke der Elektroden 3 und 5 hängt damit zusammen, dass bei der dargestellten bevorzugten Ausführungsform beide Elektroden eine elektrisch leitfähige Elektrodenmasse 11 bzw. 12 aufweisen, in die die Ionen des aktiven Metalls beim Laden bzw. Entladen der Zelle aufgenommen werden. Geeignete Materialien wurden bereits genannt. Besonders bevorzugt ist die negative Elektrode 3 eine Graphitelektrode, wobei ihre (bevorzugt poröse) Elektrodenmasse 11 weitgehend aus Kohlenstoff besteht. Die positive Elektrode ist bevorzugt eine Interkalationselektrode, deren Elektrodenmasse 12 aus Lithiumkobaltoxid gebildet ist und bevorzugt ebenfalls eine poröse Struktur hat. Im entladenen Zustand ist das Lithium im Inneren der positiven Elektrode gespeichert. Beim Laden wandern Lithiumionen durch die poröse Isolatorschicht 4 in die Elektrodenmasse 11 der negativen Elektrode. Bei bestimmten Betriebszuständen findet, wie weiter oben erläutert, darüber hinaus eine Abscheidung des aktiven Metalls an der Grenzfläche zwischen der Elektrodenmasse 11 und der porösen Isolatorschicht 4 statt. Dabei dringt das aktive Metall in die Poren der Isolatorschicht 4 ein und wächst durch die poröse Isolatorschicht 4 hindurch schließlich bis an die Grenzfläche zwischen der positiven Elektrode 5 und der Isolatorschicht 4, wo die erläuterten lokalen Kurzschlüsse stattfinden.

In den Figuren 1 und 2 nicht dargestellt ist die erforderliche elektrische Verbindung zwischen den Elektrodenmassen 11,12 und den Ableitern 6,7. Sie wird durch metallene Ableitelemente gewährleistet, die in üblicher Weise mit den Elektrodenmassen 11,12 verbunden sein können. In Frage kommen beispielsweise dünne Ableitbleche auf der von dem porösen Isolator 4 abgewandten Oberfläche der Elektrodenmassen 11 und 12, aber auch poröse Metallstrukturen, beispielsweise in Form von Metallschäumen, in die die Elektrodenmasse partiell oder vollständig eingearbeitet ist. Auch insofern ist keine nähere Erläuterung erforderlich, weil derartige Konstruktionen aus dem Stand der Technik bekannt sind.

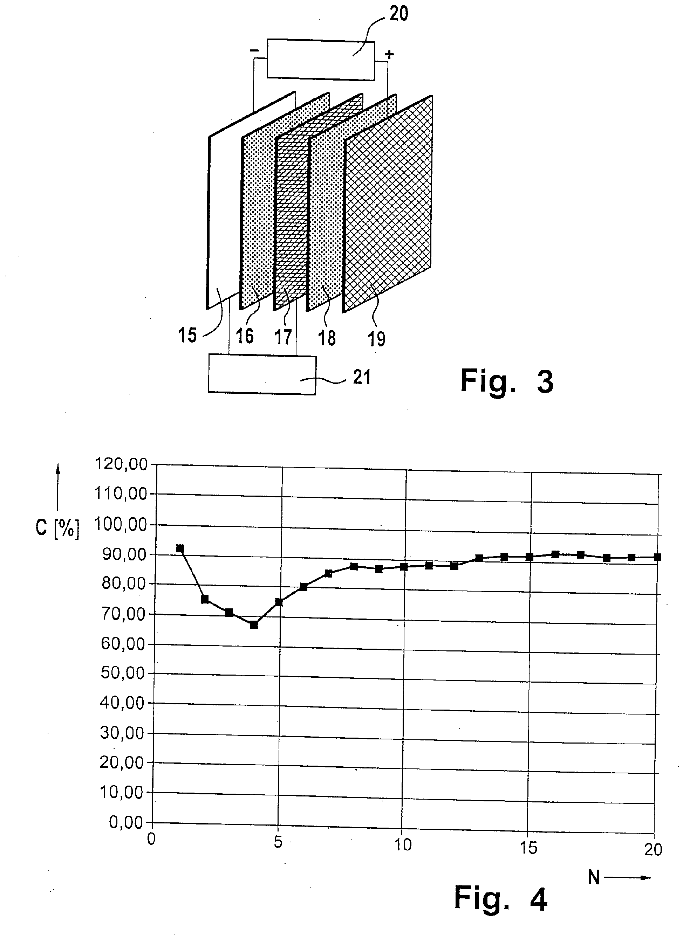

Die Konstruktionsmerkmale der porösen Isolatorschicht 4, durch die deren bevorzugte Eigenschaften (Durchlässigkeit für an der negativen Elektrode abgeschiedene aktive Masse, aber Sicherstellung von lokal begrenzten Kurzschlüssen) erreicht werden, können nicht in allgemein verbindlichen Werten (beispielsweise hinsichtlich der Porösität und der Strukturbestandteile) angegeben werden. Die Eignung eines für die Isolatorschicht vorgesehenen Materials für eine bestimmte Zelle lässt sich jedoch experimentell leicht prüfen. Ein geeigneter Experimentalaufbau ist in Figur 3 stark schematisiert dargestellt. Er besteht aus folgender Schichtenfolge:
Negative Elektrode 15 aus Ni-Metall; geeignet ist sowohl eine Metallfolie als auch ein Schaum- oder Streckmetall aus Nickel.
Testmaterial 16: auf seine Eignung für die Isolatorschicht 4 zu untersuchendes Material
Hilfselektrode 17 aus Ni-Metall; sie muss flüssigkeitsdurchlässig sein und kann beispielsweise aus Streckmetall oder perforiertem Blech bestehen.
Separator 18: Geeignet ist ein übliches Separatormaterial; in dem Experimentalaufbau kommt es nur auf dessen elektrisch isolierende Eigenschaften bei gleichzeitiger Durchlässigkeit für den Elektrolyt an.
Positive Elektrode 19: LiCoO₂ in Ni-Schaum

Die Schichten werden aufeinander gestapelt und mittels eines nicht dargestellten Rahmens zusammengepresst. Der gesamte Aufbau wird in eine auf SO₂ basierende Elektrolytlösung getaucht, deren Zusammensetzung der Elektrolytlösung der geplanten Zelle entspricht.

Die dargestellte Experimentalzelle wird mittels eines Ladegerätes 20 geladen, wobei (wie zuvor für die Zelle der Figuren 1 und 2 beschrieben) Lithium aus der positiven Elektrode 19 ausgelagert wird und sich in der negativen Elektrode abscheidet. Während des Ladevorgangs wird die Potentialdifferenz zwischen der negativen Elektrode und der Hilfselektrode mittels eines Spannungsmessgerätes 21 überwacht. Sie beträgt normalerweise 3,3 Volt (Spannung eines Li-Ni-Elementes). Wenn Lithium durch die Isolatorschicht 16 zu der Hilfselektrode 17 durchwächst, führt dies zu einer Verringerung der Potentialdifferenz. Zu diesem Zeitpunkt wird die Messung beendet und die Experimentalzelle auseinandergebaut. durch optische Untersuchung der Isolatorschicht (auf der der Hilfselektrode 17 zugewandten Seite) kann die Art des Lithiumwachstums festgestellt werden. Die Stellen, an denen das Lithium durchgewachsen ist, sowie die eventuellen Ansammlungen von Lithium, sind gut zu erkennen. Somit lässt sich feststellen, ob das Lithium wie gewünscht die zu untersuchende Schicht 16 nur an lokal begrenzten Stellen durchdringt und sich demzufolge als poröse Isolatorschicht für die Erfindung eignet.

Figur 4 zeigt Ergebnisse der experimentellen Erprobung einer erfindungsgemäßen separatorlosen Messzelle. Im konkreten Fall hatte die Zelle eine positive Elektrode aus LiCoO₂ und eine negative Elektrode mit unmittelbarer Abscheidung von metallischem Lithium in eine poröse Struktur aus Siliciumcarbid, die in unmittelbarem Kontakt zu der Elektrodenmasse der positiven Elektrode stand. Als Elektrolyt wurde LiAlCl₄ x 1,5 SO₂ verwendet.

Aufgetragen ist die Kapazität C der Zelle in Prozent der Nennkapazität gegenüber der Zahl N der Lade- und Entladezyklen. Nach einem anfänglichen Kapazitätsverlust durch strukturelle Inhomogenitäten der negativen Elektrode stabilisierte sich die Kapazität auf 90 %. Dies zeigt die Funktionstüchtigkeit der separatorlosen Konstruktion.

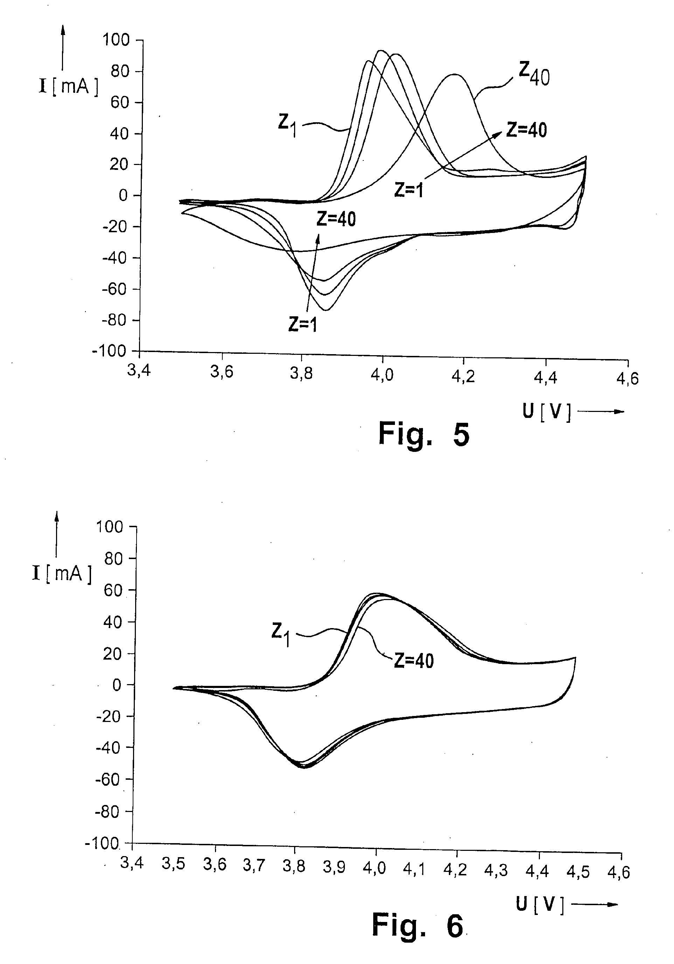

Die Figuren 5 bis 8 zeigen Ergebnisse, die bei der experimentellen Erprobung von Elektroden gewonnen wurden, welche durch Entfernung von Hydroxidionen und H⁺-Ionen optimiert wurden. Dabei wurden positive Elektroden, die optimiert worden waren, mit nicht optimierten Elektroden verglichen. Der Versuchsaufbau hatte folgende Merkmale:
Geometrische Elektrodenfläche: 1 cm²
Elektrodenkapazität: 40 mAh
Elektrolytlösung: LiAlCl₄ x 1,5 SO₂
Elektrodenmaterial: LiCoO₂

In einer gebräuchlichen Experimentalzelle ("E-Zelle" mit Referenzelektrode zur stromlosen Messung des Potentials) wurden Zyklen durchgeführt, bei denen die Spannung zwischen 3,5 V und 4,5 V mit einer Durchlaufgeschwindigkeit von 0,2 mV/s geändert wurde. Die Figuren 5 und 6 zeigen zyklische Voltamogramme, die dabei einerseits mit einer nicht erfindungsgemäß optimierten Elektrode und andererseits mit einer erfindungsgemäß optimierten Elektrode gewonnen wurden. Aufgetragen ist die gemessene Stromstärke I in mA gegen die an die Zelle angelegte Spannung υ in V gegen die Li/Li⁺-Halbzelle. Dargestellt sind jeweils vier Zyklen, darunter der erste Zyklus Z₁ und der letzte Zyklus Z₄₀.

Bei der Zelle mit der nicht erfindungsgemäß optimierten positiven Elektrode zeigt Figur 5 eine deutliche Veränderung des zyklischen Voltamogramms, die vor allem dadurch charakterisiert ist, dass sich die Position des aniodischen Peaks zu größeren Spannungen verschiebt. Während er bei dem ersten Zyklus noch deutlich unter 4 V liegt, liegt er bei dem vierzigsten Zyklus nahe bei 4,2 V. Dies entspricht einem Anstieg des Innenwiderstandes der Zelle, der nach der Erkenntnis der Erfinder auf die Passivierung der positiven Elektrode zurückzuführen ist.

Die in Figur 6 dargestellten Ergebnisse zeigen, dass die erfindungsgemäße Optimierung der Elektrode dazu führt, dass sich das zyklische Voltamogramm während vierzig Zyklen praktisch nicht ändert: Die elektrischen Werte der Zelle, insbesondere ihr Innenwiderstand, bleiben konstant.

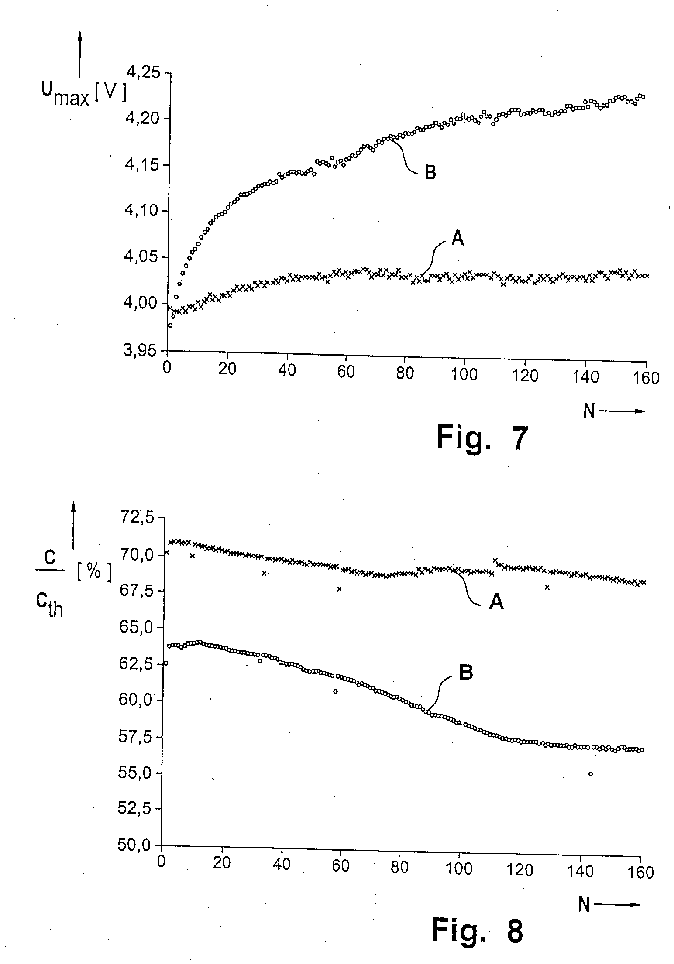

In Figur 7 sind diese Ergebnisse nochmals zusammenfassend dargestellt. Hier ist für Zellen mit erfindungsgemäß optimierter Elektrode (Kurve A) und für Zellen mit nicht optimierter Elektrode (Kurve B) die Änderung des Maximums des Peaks (Uₘₐₓ in Volt) gegen die Zahl der Zyklen dargestellt, wobei in diesem Fall mehr als 150 Zyklen durchgeführt wurden. Auch diese Darstellung zeigt, dass sich ohne die erfindungsgemäße Elektrodenoptimierung die Peaklage und damit der Innenwiderstand der Zelle stetig ändert, während sie bei Verwendung einer erfindungsgemäß optimierten Elektrode nahezu konstant bleibt.

Figur 8 zeigt für eine Zelle mit erfindungsgemäß optimierter Elektrode (Kurve A) und eine Zelle mit nicht optimierter Elektrode (Kurve B) die Abhängigkeit der elektrischen Entladekapazität (in % der theoretischen Kapazität von der Zahl N der Lade- und Entladezyklen). Auch diese Kenngröße wird durch die Erfindung wesentlich verbessert: Einerseits ist die Anfangskapazität um etwa 7% höher, andererseits ist die mit dem wiederholten Laden und Entladen der Zelle verbundene Kapazitätsabnahme wesentlich geringer.

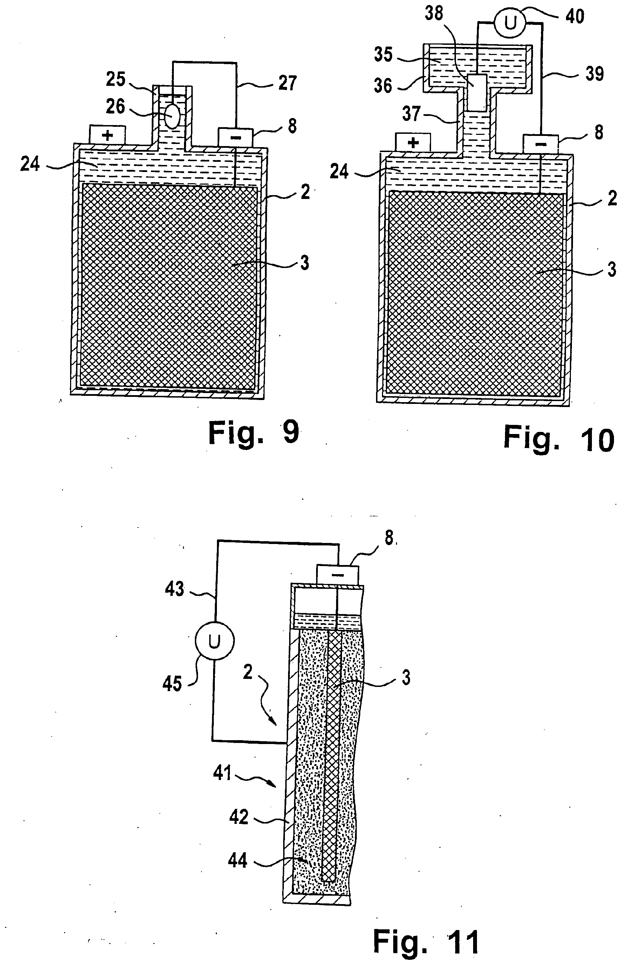

Die Figuren 9 bis 11 verdeutlichen die Erfindung. Die Erläuterung erfolgt anhand von Zellen mit Lithium als aktivem Metall, einer negativen Graphit-Insertionselektrode und einer positiven Interkalationselektrode mit einer Elektrodenmasse aus Lithiumkobaldoxid. Sie lassen sich leicht auf den allgemeinen Fall anderer geeigneter aktiver Metalle und Elektrodenmaterialien übertragen.

Figur 9 zeigt eine mit Elektrolyt 24 gefüllte Zelle 2. Die positive Elektrode ist bei der hier gewählten Darstellung nicht zu erkennen, jedoch selbstverständlich vorhanden. Die Zelle 1 hat einen Einfüllstutzen 25, durch den ein Stück Lithiummetall 26 in den Elektrolyt 24 eingetaucht werden kann. Das Lithiummetall 26 ist elektrisch mit dem Minuspol 8 der Batterie, also mit der negativen Elektrode 3, verbunden. Ohne Anlegen einer äußeren Spannung führt diese Anordnung dazu, dass sich das Lithium 26 nach und nach auflöst, während gleichzeitig eine Deckschicht aus Lithiumdithionit auf der negativen Elektrode gebildet wird. Der Batteriestromkreis zwischen der positiven und der negativen Elektrode ist bei diesem Vorgang offen.

Bei dieser Ausführungsform bildet das Lithiummetall 26 gleichzeitig die Hilfselektrode und den Zusatzvorrat des aktiven Metalls. An der negativen Elektrode NE und der Hilfselektrode HE laufen folgende Reaktionen ab:

NE: 2 Li⁺ + 2 SO₂ + 2 e⁻ → 2 Li₂S₂O₄

HE: 2 Li → 2 Li⁺ + 2 e⁻

Die bei der Reaktion an der Hilfselektrode frei werdenden Elektronen fließen über die Leitungsverbindung 27 zu der negativen Elektrode 3, wo sie bei der dort ablaufenden Reaktion verbraucht werden. Aufgrund der thermodynamischen Gegebenheiten ist bei dieser Ausführungsform keine Spannungsquelle in der Leitung 27 erforderlich.

Bei der in Figur 9 dargestellten Ausführungsform wird vor dem ersten Laden der Zelle die Deckschicht auf der negativen Elektrode gebildet, ohne dass ein Teil des Lithiums aus der positiven Elektrode verbraucht wird. Der Lithiumgehalt der positiven Elektrode steht deswegen in vollem Umfang für das Laden und das nachfolgende Entladen der Zelle zur Verfügung.

Eine Anordnung ähnlich Figur 9 kann auch verwendet werden, um nach dem ersten Ladevorgang die positive Elektrode wieder zu "regenerieren", indem man den Verlust an aktivem Metall ersetzt, der in der positiven Elektrode infolge der Deckschichtbildung bei einem vorausgehenden Ladevorgang eingetreten ist. In diesem Fall ist die positive Elektrode die Zielelektrode der Lithiumübertragung, d.h. nach dem ersten Laden der Zelle wird die Leitungsverbindung 27 zwischen dem Lithiummetall 26 und der positiven Elektrode hergestellt, während gleichzeitig der Batteriestromkreis zwischen der positiven und der negativen Elektrode offen ist. Dadurch werden Lithiumionen gezielt in die positive Elektrode eingelagert, wobei dort folgende Reaktion abläuft:

PE: Li₍₁₋ₓ₎CoO₂ + x Li⁺ + x e⁻ → LiCoO₂

Figur 10 zeigt eine Ausführungsform, bei der eine zusätzliche Menge Elektrolyt 35 als Zusatzvorrat des Lithiums zur Verfügung gestellt wird. Die zusätzliche Menge Elektrolyt befindet sich im dargestellten Fall in einem Behälter 36, der über eine Elektrolytbrücke 37 mit dem Elektrolyt 24 in der Zelle 2 verbunden ist. Eine Hilfselektrode 38 ist über eine Leitungsverbindung 39 mit dem negativen Anschlusskontakt 8 der Zelle und folglich mit der negativen Elektrode 3 verbunden. Durch eine in der Leitungsverbindung 39 liegende Spannungsquelle 40 wird eine (experimentell optimierte) elektrische Spannung zwischen der Hilfselektrode 38 und der negativen Elektrode 3 erzeugt, die dazu führt, dass an den Elektroden folgende Reaktionen ablaufen:

NE: 2 Li⁺ + 2 SO₂ + 2 e⁻ 2 Li₂S₂O₄

HE: 2 AlCl₄⁻ → 2 AlCl₃ + Cl₂ + 2e⁻

Die Reaktion an der Hilfselektrode liefert über die Leitungsverbindung 39 die Elektronen, die zur Erzeugung der Deckschicht an der negativen Elektrode erforderlich sind. Die erforderlichen Li⁺-Ionen stehen in der zusätzlichen Menge des Elektrolyts (d.h. in dem darin enthaltenen Leitsalz) zur Verfügung.

Auch die in Figur 10 dargestellte Anordnung kann in abgewandelter Weise verwendet werden, um die positive Elektrode nach dem ersten Ladevorgang und dem damit verbundenen Verlust an Lithium zu regenerieren, wobei auch in diesem Fall die Leitungsverbindung zu dem positiven Anschlusskontakt der Zelle hergestellt wird und die Übertragung des Lithiums nach dem ersten Ladevorgang stattfindet.

Figur 11 zeigt eine Ausführungsform, bei der die Hilfselektrode von einer aus Metall bestehenden Wand 42 des Gehäuses 41 der Zelle 2 gebildet wird. Die Leitungsverbindung 43 wird demzufolge zwischen dem Gehäuse 41 und dem negativen Anschlusskontakt 8 hergestellt. Der Zusatzvorrat an Lithium wird in Form von Lithiumdithionit 44 zur Verfügung gestellt, das (beispielsweise als Pulver) so in die Zelle eingefüllt wurde, dass es sich im Zwischenraum zwischen der Innenwand des Gehäuses 41 und der negativen Elektrode 3 befindet. Dadurch haben die Reaktionsprodukte der nachfolgend erläuterten Reaktionen kurze Diffusionswege sowohl zu der Hilfselektrode (Gehäusewand 42) als auch zu der Zielelektrode (hier die negative Elektrode 3).

Getrieben durch die Spannung einer in die Leitungsverbindung 43 geschalteten Spannungsquelle 45 laufen an den Elektroden folgende Reaktionen ab:

NE: 2 Li⁺ + 2 SO₂ + 2 e⁻ → 2 Li₂S₂O₄

HE: 2 AlCl₄⁻ → 2 AlCl₃ + Cl₂ + 2e⁻

Die Reaktion an der Hilfselektrode (Gehäusewand) hat folgende weitere Reaktionen zur Folge:
(a): Cl₂ + SO₂ → SO₂Cl₂
(b): SO₂Cl₂ + Li₂S₂O₄ → 2 LiCl + 3 SO₂
(c): 2 LiCl + 2 AlCl₃ → 2 Li⁺ + 2 AlCl₄⁻

In Reaktion (a) reagiert das an der Hilfselektrode gebildete Chlor mit dem SO₂ aus dem Elektrolyt zu Sulfurylchlorid, das in Reaktion (b) mit dem als Lithium-Zusatzvorrat vorhandenen Lithiumdithionit unter Bildung von Lithiumchlorid und Schwefeldioxid weiterreagiert. Die Reaktion (c) führt - ausgehend von Produkten der Vorreaktionen - zur Bildung von Lithiumionen, die in der Deckschicht-Bildungsreaktion an der negativen Elektrode weiterreagieren.

Auch in diesem Fall kann die positive Elektrode die Zielelektrode sein, wobei analog das gleiche wie bei den vorhergehenden Ausführungsformen gilt.

## Patentansprüche

1. Verfahren zur Herstellung einer elektrochemischen Batteriezelle, die eine positive Elektrode, eine negative Elektrode und eine auf SO₂ basierende Elektrolytlösung mit einem Leitsalz aufweist, wobei eine elektrochemische Reaktion zur Bildung einer das aktive Metall der Zelle enthaltenden Deckschicht auf der negativen Elektrode führt,
bei welchem
die positive Elektrode eine Interkalationsverbindung enthält und das aktive Metall im entladenen Zustand der Zelle im Inneren der positiven Elektrode gespeichert ist, und
zur Optimierung hinsichtlich einer aus der Bildung der Deckschicht resultierenden Minderung der Entladekapazität ein für die Bildung der Deckschicht erforderliches aktives Metall aus einem Zusatzvorrat zu einer der Elektroden übertragen wird, wobei
- der Zusatzvorrat in Kontakt mit der Elektrolytlösung steht,
- eine Hilfselektrode in elektrisch leitendem Kontakt zu der Elektrolytlösung steht,
- eine elektrische Leitungsverbindung zwischen der Hilfselektrode und der Elektrode, zu der das aktive Metall übertragen werden soll, hergestellt wird und
- die Übertragung des aktiven Metalls von dem Zusatzvorrat zu der Elektrode dadurch bewirkt wird, dass ein elektrischer Strom zwischen der Hilfselektrode und der Elektrode, zu der das aktive Metall übertragen wird, fließt.

2. Verfahren nach Anspruch 1, bei welchem der Zusatzvorrat metallisches aktives Metall enthält.

3. Verfahren nach Anspruch 1, bei welchem der Zusatzvorrat das aktive Metall in einer Verbindung enthält.

4. Verfahren nach einem der vorhergehenden Ansprüche, bei welchem der Zusatzvorrat zugleich die Hilfselektrode bildet.

5. Verfahren nach einem der vorhergehenden Ansprüche, bei welchem der Zusatzvorrat eine zusätzliche Menge des Elektrolyts einschließt.

6. Verfahren nach einem der vorhergehenden Ansprüche, bei welchem die Leitungsverbindung zwischen der Elektrode, zu der das aktive Metall übertragen werden soll, und dem Gehäuse derartig hergestellt wird, dass ein elektrisch leitender Teil der Innenwand des Gehäuses die Hilfselektrode bildet.

7. Verfahren nach einem der vorhergehenden Ansprüche, bei welchem die Elektrode, zu der das aktive Metall übertragen wird, die negative Elektrode ist und die Übertragung vor dem ersten Laden der Zelle erfolgt.

8. Verfahren nach einem der vorhergehenden Ansprüche, bei welchem die Elektrode, zu der das aktive Metall übertragen wird, die positive Elektrode ist, die Übertragung erfolgt, nachdem die Zelle erstmals unter Bildung einer das aktive Metall enthaltenden Deckschicht auf der negativen Elektrode zumindest teilweise geladen wurde, und
durch die Zuführung des aktiven Metalls zu der positiven Elektrode die mit dem vorausgehenden Ladevorgang verbundene Abnahme von deren Gehalt an aktivem Metall zumindest teilweise ausgeglichen wird.

9. Verfahren nach einem der vorhergehenden Ansprüche,
bei welchem
zur Optimierung einer Elektrode Hydroxid-Ionen von deren Oberfläche entfernt werden, wobei
ein Reinigungsmittel, das eine mit Hydroxid-Ionen reagierende erste Reinigungskomponente enthält, derartig mit der Elektrode in Kontakt gebracht wird, dass an ihr gebundene Hydroxid-Ionen durch Reaktion mit der ersten Reinigungskomponente von der Elektrodenoberfläche gelöst werden, und
Bestandteile des Reinigungsmittels oder Reaktionsprodukte, die die Funktion der Zelle stören könnten, von der Elektrode entfernt werden.

10. Verfahren nach Anspruch 9, bei welchem die erste Reinigungskomponente eine protonenfreie Lewis-Säure ist, insbesondere ausgewählt aus der Gruppe bestehend aus AlF₃, BF₃, CO₂, CS₂ und GaCl₃.

11. Verfahren nach einem der vorhergehenden Ansprüche, bei welchem die Elektrode eine Insertionselektrode, insbesondere eine Interkalationselektrode ist.

12. Verfahren nach Anspruch 11, bei welchem ein Reinigungsmittel, das eine mit H⁺-Ionen reagierende zweite Reinigungskomponente enthält, derartig mit der Insertionselektrode in Kontakt gebracht wird, dass in ihr gebundene H⁺-Ionen durch Reaktion mit der Komponente aus der Elektrode extrahiert werden, wobei die zweite Reinigungskomponente vorzugsweise ein Salz ist, das mit H⁺-Ionen, die an der Insertionselektrode gebunden sind, eine lonenaustauschreaktion eingeht, insbesondere ein Halogenid, vor allem ein Fluorid eines Alkalimetalls, eines Erdalkalimetalls oder eines Elementes der dritten Hauptgruppe des Periodensystems, insbesondere LiCI oder LiF.

13. Elektrochemische Batteriezelle mit
einer negativen Elektrode, einer ein Leitsalz enthaltenden auf SO₂ basierenden Elektrolytlösung und einer positiven Elektrode,
wobei
die positive Elektrode eine Interkalationsverbindung enthält und das aktive Metall im entladenen Zustand der Zelle im Inneren der positiven Elektrode gespeichert ist, undeine der Elektroden, insbesondere die negative Elektrode, nach einem der Ansprüche 1 bis 9 hinsichtlich einer aus der Bildung einer Deckschicht auf der negativen Elektrode resultierenden Minderung der Entladekapazität optimiert ist.

14. Elektrochemische Batteriezelle nach Anspruch 13,
wobei
die Elektrolytlösung auf SO₂ basiert und
mindestens eine der Elektroden eine Insertionselektrode, insbesondere Interkalationselektrode ist, deren Oberfläche im wesentlichen frei ist von Hydroxid-Ionen.

15. Batteriezelle nach Anspruch 14, wobei die Insertionselektrode im wesentlichen frei von H⁺-Ionen ist.

16. Batteriezelle nach einem der Ansprüche 14 oder 15, wobei die Insertionselektrode die positive Elektrode der Batteriezelle ist.

17. Batteriezelle nach einem der Ansprüche 14 bis 16, wobei die negative Elektrode eine elektrisch leitfähige Elektrodenmasse aufweist, die vorzugsweise Kohlenstoff enthält und in welche die Metallionen des Leitsalzes beim Laden der Zelle aufgenommen werden und eine poröse Isolatorschicht zwischen der elektrisch leitfähigen Elektrodenmasse der negativen Elektrode und der positiven Elektrode verläuft.

18. Batteriezelle nach einem der Ansprüche 14 bis 17, wobei die Insertionselektrode höchstens 5000 ppm an chemisch gebundenem Wasser enthält.

19. Verfahren nach einem der Ansprüche 1 bis 12 oder Batteriezelle nach einem der Ansprüche 13 bis 18, wobei das aktive Metall ausgewählt ist aus der Gruppe bestehend aus den Alkalimetallen, den Erdalkalimetallen und den Metallen der zweiten Gruppe des Periodensystems, insbesondere Lithium, Natrium, Calcium, Zink oder Aluminium.

## Claims

1. Method for producing an electrochemical battery cell which has a positive electrode, a negative electrode and a SO₂-based electrolyte solution containing a conductive salt, wherein an electrochemical reaction results in the formation of a cover layer on the negative electrode, which cover layer contains the active metal of the cell,
in which
the positive electrode contains an intercalation compound and in the discharged state of the cell the active metal is stored in the interior of the positive electrode, and
for optimisation in respect of a reduction in the discharge capacity resulting from the formation of the cover layer, an active metal required for the formation of the cover layer is transferred from a reserve supply to one of the electrodes, wherein
- the reserve supply is in contact with the electrolyte solution,
- an auxiliary electrode is in electrically conducting contact with the electrolyte solution,
- an electrical line connection is established between the auxiliary electrode and the electrode to which the active metal is to be transferred, and
- the transfer of the active metal from the reserve supply to the electrode is effected by an electric current flowing between the auxiliary electrode and the electrode to which the active metal is being transferred.

2. Method according to claim 1, in which the reserve supply contains metallic active metal.

3. Method according to claim 1, in which the reserve supply contains the active metal in a compound.

4. Method according to any one of the preceding claims, in which the reserve supply at the same time forms the auxiliary electrode.

5. Method according to any one of the preceding claims, in which the reserve supply includes an additional amount of the electrolyte.

6. Method according to any one of the preceding claims, in which the line connection between the electrode to which the active metal is to be transferred and the housing is established in such a way that an electrically conducting portion of the inner wall of the housing forms the auxiliary electrode.

7. Method according to any one of the preceding claims, in which the electrode to which the active metal is transferred is the negative electrode and the transfer takes place before the first charging of the cell.

8. Method according to any one of the preceding claims, in which the electrode to which the active metal is transferred is the positive electrode,
the transfer is effected after the cell has been at least partly charged for the first time, with a cover layer containing the active metal being formed, and
as a result of the supply of the active metal to the positive electrode, the decrease in its content of active metal associated with the preceding charging operation is at least partly compensated.

9. Method according to any one of the preceding claims,
in which
for optimisation of an electrode, hydroxide ions are removed from the surface thereof, wherein
a cleaning agent, which contains a first cleaning component that reacts with hydroxide ions, is brought into contact with the electrode in such a way that hydroxide ions bonded thereto are detached from the electrode surface by reaction with the first cleaning component, and constituents of the cleaning agent or reaction products which could disrupt the function of the cell are removed from the electrode.

10. Method according to claim 9, in which the first cleaning component is a proton-free Lewis acid, especially selected from the group consisting of AlF₃, BF₃, CO₂, CS₂ and GaCl₃.

11. Method according to any one of the preceding claims, in which the electrode is an insertion electrode, especially an intercalation electrode.

12. Method according to claim 11, in which a cleaning agent which contains a second cleaning component that reacts with H⁺ ions is brought into contact with the insertion electrode in such a way that H⁺ ions bonded therein are extracted from the electrode by reaction with the component, the second cleaning component preferably being a salt which enters into an ion exchange reaction with H⁺ ions that are bonded to the insertion electrode, especially a halide, more especially a fluoride of an alkali metal, of an alkaline earth metal or of an element of the third main group of the periodic system, especially LiCI or LiF.

13. Electrochemical battery cell having
a negative electrode, a SO₂-based electrolyte solution containing a conductive salt, and a positive electrode,
wherein
the positive electrode contains an intercalation compound and in the discharged state of the cell the active metal is stored in the interior of the positive electrode and one of the electrodes, especially the negative electrode, has been optimised in respect of a reduction in the discharge capacity resulting from the formation of a cover layer on the negative electrode in accordance with any one of claims 1 to 9.

14. Electrochemical battery cell according to claim 13,
wherein
the electrolyte solution is based on SO₂ and
at least one of the electrodes is an insertion electrode, especially an intercalation electrode, the surface of which is substantially free of hydroxide ions.

15. Battery cell according to claim 14, wherein the insertion electrode is substantially free of H⁺ ions.

16. Battery cell according to either one of claims 14 and 15, wherein the insertion electrode is the positive electrode of the battery cell.

17. Battery cell according to any one of claims 14 to 16, wherein the negative electrode has an electrically conductive electrode mass which preferably contains carbon and in which the metal ions of the conductive salt are taken up during charging of the cell, and a porous insulator layer runs between the electrically conductive electrode mass of the negative electrode and the positive electrode.

18. Battery cell according to any one of claims 14 to 17, wherein the insertion electrode contains a maximum of 5000 ppm of chemically bonded water.

19. Method according to any one of claims 1 to 12 or a battery cell according to any one of claims 13 to 18, wherein the active metal is selected from the group consisting of the alkali metals, the alkaline earth metals and the metals of the second group of the periodic system, especially lithium, sodium, calcium, zinc or aluminium.

## Revendications

1. Procédé de fabrication d'un élément de batterie électrochimique qui présente une électrode positive, une électrode négative et une solution électrolytique à base de SO₂ contenant un sel conducteur, dans lequel une réaction électrochimique entraîne la formation sur l'électrode négative d'une couche de recouvrement contenant le métal actif de l'élément,
dans lequel
l'électrode positive contient un composé d'intercalation et, à l'état déchargé de l'élément, le métal actif est stocké à l'intérieur de l'électrode positive, et
pour l'optimisation en ce qui concerne une diminution de la capacité de décharge résultant de la formation de la couche de recouvrement, un métal actif nécessaire à la formation de la couche de recouvrement est transféré d'une réserve supplémentaire vers l'une des électrodes,
- la réserve supplémentaire étant en contact avec la solution électrolytique,
- une électrode auxiliaire étant en contact électriquement conducteur avec la solution électrolytique,
- une liaison conductrice électrique étant établie entre l'électrode auxiliaire et l'électrode vers laquelle le métal actif doit être transféré et
- le transfert du métal actif de la réserve supplémentaire vers l'électrode étant réalisé par un courant électrique circulant entre l'électrode auxiliaire et l'électrode vers laquelle le métal actif est transféré.

2. Procédé selon la revendication 1 dans lequel la réserve supplémentaire contient du métal actif métallique.

3. Procédé selon la revendication 1, dans lequel la réserve supplémentaire contient le métal actif dans un composé.

4. Procédé selon l'une des revendications précédentes, dans laquelle la réserve supplémentaire forme en même temps l'électrode auxiliaire.

5. Procédé selon l'une des revendications précédentes dans laquelle la réserve supplémentaire inclut une quantité supplémentaire d'électrolyte.

6. Procédé selon l'une des revendications précédentes, dans lequel la liaison conductrice entre l'électrode vers laquelle le métal actif doit être transféré et le boîtier est réalisée de telle sorte qu'une partie électriquement conductrice de la paroi intérieure du boîtier forme l'électrode auxiliaire.

7. Procédé selon l'une des revendications précédentes, dans lequel l'électrode vers laquelle le métal actif est transféré est l'électrode négative et le transfert a lieu avant la première charge de l'élément.

8. Procédé selon l'une des revendications précédentes, dans lequel l'électrode vers laquelle le métal actif est transféré est l'électrode positive,
le transfert a lieu après que l'élément a été au moins partiellement chargé pour la première fois avec formation d'une couche de recouvrement contenant le métal actif sur l'électrode négative et
l'apport de métal actif à l'électrode positive compense au moins partiellement la diminution de sa teneur en métal actif liée à l'opération de charge précédente.

9. Procédé selon l'une des revendications précédentes,
dans lequel
pour optimiser une électrode, des ions hydroxyde sont éliminés de sa surface,
un agent de nettoyage contenant un premier composant de nettoyage réagissant avec les ions hydroxyde étant mis en contact avec l'électrode de telle sorte que les ions hydroxyde liés à celle-ci sont libérés de la surface de l'électrode par réaction avec le premier composant de nettoyage et
les constituants de l'agent de nettoyage ou les produits de réaction qui pourraient perturber le fonctionnement de l'élément étant éliminés de l'électrode.

10. Procédé selon la revendication 9, dans lequel le premier composant de nettoyage est un acide de Lewis exempt de protons, en particulier choisi dans le groupe constitué par AlF₃, BF₃, CO₂, CS₂ et GaCl₃.

11. Procédé selon l'une des revendications précédentes, dans lequel l'électrode est une électrode d'insertion, en particulier une électrode d'intercalation.

12. Procédé selon la revendication 11, dans lequel un agent de nettoyage contenant un second composant de nettoyage réagissant avec les ions H⁺ est mis en contact avec l'électrode d'insertion de telle sorte que les ions H⁺ qui y sont liés sont extraits de l'électrode par réaction avec le composant, le second composant de nettoyage étant de préférence un sel qui entre en réaction d'échange d'ions avec les ions H⁺ qui sont liés à l'électrode d'insertion, en particulier un halogénure, surtout un fluorure d'un métal alcalin, d'un métal alcalino-terreux ou d'un élément du troisième groupe principal du tableau périodique, en particulier LiCl ou LiF.

13. Élément de batterie électrochimique, comprenant
une électrode négative, une solution électrolytique à base de SO₂ contenant un sel conducteur et une électrode positive,
dans lequel
l'électrode positive contient un composé d'intercalation et, à l'état déchargé de l'élément, le métal actif est stocké à l'intérieur de l'électrode positive, et l'une des électrodes, en particulier l'électrode négative, est optimisée selon l'une des revendications 1 à 9 en ce qui concerne une diminution de la capacité de décharge résultant de la formation d'une couche de recouvrement sur l'électrode négative.

14. Élément de batterie électrochimique selon la revendication 13,
dans lequel
la solution électrolytique est à base de SO₂ et
au moins l'une des électrodes est une électrode d'insertion, en particulier une électrode d'intercalation, dont la surface est sensiblement exempte d'ions hydroxyde.

15. Élément de batterie selon la revendication 14, dans lequel l'électrode d'insertion est sensiblement exempte d'ions H⁺.

16. Élément de batterie selon l'une des revendications 14 ou 15, dans lequel l'électrode d'insertion est l'électrode positive de l'élément de batterie.

17. Élément de batterie selon l'une des revendications 14 à 16, dans lequel l'électrode négative présente une masse d'électrode électriquement conductrice qui contient de préférence du carbone et dans laquelle les ions métalliques du sel conducteur sont absorbés lors de la charge de l'élément et une couche isolante poreuse s'étend entre la masse d'électrode électriquement conductrice de l'électrode négative et l'électrode positive.

18. Élément de batterie selon l'une des revendications 14 à 17, dans lequel l'électrode d'insertion contient au maximum 5 000 ppm d'eau chimiquement liée.

19. Procédé selon l'une des revendications 1 à 12 ou élément de batterie selon l'une des revendications 13 à 18, dans lequel le métal actif est choisi dans le groupe constitué par les métaux alcalins, les métaux alcalino-terreux et les métaux du deuxième groupe du tableau périodique, en particulier le lithium, le sodium, le calcium, le zinc ou l'aluminium.
